# EUROPÄISCHE PATENTANMELDUNG

(11) **EP 1 148 603 A2**
(43) Veröffentlichungstag der Anmeldung: **24.10.2001**
(21) Anmeldenummer: 01440079.0
(22) Anmeldetag: 19.03.2001
(51) Int. Cl.: H02G 1/08, H02G 9/06

(54) **Vorrichtung zur Verlegung eines Kabels bzw. einer Schutzhülle**

(30) Priorität: 22.04.2000 DE 10019977
(71) Anmelder: ALCATEL, 75008 Paris (FR)
(72) Erfinder: Teschner, Wolfgang, 31515 Wunstorf (DE); Liese, Wolfgang, 30989 Gehrden (DE)
(74) Vertreter: Rausch, Gabriele, Dr.

(57) **Zusammenfassung**

Bei einem Verfahren zur Verlegung eines Kabels bzw. einer Schutzhülle für eine zu einem späteren Zeitpunkt in die Schutzhülle einzubringende Kabelseele in einem Abwasserrohr wird das Kabel bzw. die Schutzhülle mittels Briden an der Innenwandung des Abwasserrohres in bestimmten Abständen befestigt. Dabei wird das Kabel bzw. die Schutzhülle im Bereich von Hauseinläufen ausgelenkt, so daß das Kabel bzw. die Schutzhülle den Hauseinlauf umfährt. Der Abstand der Briden voneinander ist im Bereich der Auslenkung wesentlich kürzer als im Bereich des gestreckten Verlaufs des Kabels bzw. der Schutzhülle. Das Kabel bzw. die Schutzhülle wird in den Schächten abgespannt und mit einer Kraft von mindestens 250 N vorgespannt.

## Beschreibung

Die Erfindung betrifft ein Verfahren zur Verlegung eines Kabels bzw. einer Schutzhülle nach Anspruch 1 sowie ein Kabel bzw. eine Schutzhülle zur Verwendung bei diesem Verfahren nach Anspruch 5.

Kosten und Dauer von Genehmigungsverfahren von Aufgrabarbeiten führen dazu, daß in zunehmendem Maße nach Alternativen für diese herkömmliche Verlegung von Kabeln gesucht wird. Beispielsweise werden neuerdings bestehende Trassen, Leitungen und Rohre mit Kabeln ausgerüstet und zusätzlich genutzt, ohne daß größere Tiefbaumaßnahmen notwendig werden.

Die Anforderungen an ein Verlegeverfahren in Kanälen, Leitungen und Rohre können wie folgt zusammengefaßt werden:
1. Führen der Kabel bzw. Röhrchen im Scheitelbereich des Kanals unter Vermeidung von Durchhang und Festsetzen von Feststoffen und Ablagerungen.
2. Keine wesentliche Beeinträchtigung der Funktion und Wartung des Kanalbetriebes durch die Einbauten. Vermeidung von Ansammlungen von Feststoffen, Zopfbildung, sowie Beeinträchtigung von Reparaturen, Restaurierungen, Reinigung, Inspektion.
3. Keine Schwächung oder Beschädigung des Kanalbauwerkes.
4. Keine nennenswerte Verringerung des Kanalquerschnittes.
5. Lenkbarkeit der Kabeltrasse im Kanal um Einläufe herum.

Aus der EP 0 251 907 B1 ist ein Verfahren zum Verlegen eines Kabels in einem Rohr bekannt, bei dem ein entlang des Rohrinneren verfahrbarer Wagen mit einem vorderen Arm das Kabel anhebt und gegen die Rohrinnenwand drückt und eine Vorrichtung Löcher in die Wandung bohrt und das Kabel mittels eines in die Bohrungen einführbaren Bügels befestigt.

Aus der WO 98/32043 geht ein Verfahren zur Verlegung von Lichtwellenleiterkabeln in nicht begehbaren für andere Zwecke genutzten Kanal- oder Rohrsystemen bekannt, bei dem die Kabel mit Hilfe eines fernsteuerbaren Kanalroboters in den Kanal eingebracht und befestigt werden. Es werden zunächst Befestigungselemente ( Briden )an der Kanalinnenwandung befestigt und anschließend das Lichtwellenleiterkabel in dafür vorgesehene Aufnahmen in den Befestigungselementen eingeklemmt. Die Mittel zur Befestigung werden durch einen federnd vorgespannten, geschlossenen Edelstahlring gebildet, der sich aufgrund seiner Vorspannung an die Kanalwandung andrückt. Die Aufnahmen für die Lichtwellenleiterkabel sind als Schnappklemmen ausgebildet. Dieses Verfahren hat sich bewährt, da keinerlei Eingriffe in die Kanalwandung erforderlich sind und der Strömungsquerschnitt des Kanals nur unwesentlich verringert wird.

Schließlich ist aus der EP 0 942 504 Al ein Verfahren zum Befestigen von Kabeln in Kanal- oder Rohrsystemen bekannt, bei dem ein zugfestes Element z. B. ein Tragseil zwischen zugänglichen Stellen innerhalb des Kanal- oder Rohrsystems gespannt und das Kabel an das Tragseil angehängt wird. Alternativ hierzu wird beschrieben, ein Kabel oder ein langgestrecktes Hohlprofil mit mindestens einem zugfesten Element zu verwenden und das zugfeste Element zu spannen. Bei diesem Verfahren wird bewußt auf zusätzliche Befestigungselemente verzichtet. Nachteilig ist bei diesem Verfahren, daß insbesondere bei Abständen von mehr als 50 m zwischen den Abspannpunkten (Schächten) hohe Spannkräfte erforderlich sind, die einen unerwünschten hohen Durchhang verhindern sollen. Die hohen Abspannkräfte erfordern ein Kabel mit einer hohen Zugbelastbarkeit d. h. der Anteil an Zugelementen im Kabel muß entsprechend groß sein. Daraus resultiert ein höheres Gewicht des Kabels, was wiederum einen höheren Durchhang zur Folge hat. Ein gravierender Nachteil dieses Verfahrens ist jedoch, daß eine Auslenkung des Kabels im Bereich von Hauseinläufen nicht möglich ist, so daß sich in diesem Bereich grobes Material ansammeln kann und u. U. zu einer Verstopfung im Bereich des Hausanschlusses führen kann. Darüber hinaus erfordern die hohen Zugkräfte spezielle Baumaßnahmen in den Schächten.

Der vorliegenden Erfindung liegt ausgehend von einem Stand der Technik mach der W098/32043 die Aufgabe zugrunde, ein vereinfachtes Verfahren zur Verlegung von Kabeln oder dergl. in Abwasserkanälen bereitzustellen, bei welchem die Anzahl der Befestigungsmittel verringert werden kann, ohne daß der Durchhang des Kabels sich vergrößert und bei welchem das Kabel oder dergl. in einfacher Weise um Hauseinläufe herumgelenkt werden kann, sowie im Zugangsbereich zum Kanal flexibel mit kleinen Biegeradien installiert werden kann.

Diese Aufgabe wird durch das im Anspruch 1 Erfaßte gelöst.

Nach dem Verfahren kann ein bereits werkseitig fertiggestelltes Kabel verlegt werden oder aber es wird ein armiertes Schutzrohr nach der Lehre der Erfindung verlegt und eine Kabelseele wird nachträglich in das verlegte Schutzrohr z. B. durch Schieben, Blasen oder Spülen eingebracht. Da u. U. beim Vorspannen des Kabels oder Schutzrohres die Briden sich in Umfangsrichtung verschieben können, wobei dann das Kabel oder das Schutzrohr in die Öffnung des Hauseinlaufes gelangt, ist es von Vorteil, wenn die Briden zumindest in der Nähe des Hauseinlaufes an der Kanalwand befestigt werden z. B. durch Kleben oder durch Krallen bzw. eine Strukturierung an der der Kanalwand zugekehrten Oberfläche der Briden. Ein weiterer Vorteil der Erfindung ist darin zu sehen, daß die Anzahl der Briden zwischen zwei Schächten und die Abspannkraft optimiert werden können, woraus wiederum ein vereinfachter Kabelaufbau resultiert. Darüber hinaus wird eine höhere Verlegeleistung ermöglicht und damit eine höhere Wirtschaftlichkeit erreicht. Das erfindungsgemäße Verfahren kann mit oder ohne Roboter durchgeführt werden.

Weitere vorteilhafte Ausgestaltungen der Erfindung sind in den Unteransprüchen erfaßt.

Die Erfindung ist anhand der in den Figuren 1 bis 3 schematisch dargestellten Ausführungsbeispiele näher erläutert.

Es zeigen:
- Figur 1: eine Draufsicht auf einen Abwasserkanal.
- Figur 2: eine seitliche Ansicht eines Abwasserkanals.
- Figur 3: einen Schnitt durch ein Kabel.

Mit 1 ist ein Abwasserkanal bezeichnet, dem Abwasser durch sogenannte Hauseinläufe 2 zugeführt wird. Das in dem Abwasserkanal 1 verlegte Kabel 3 ist im Scheitelpunkt des Abwasserkanals 1, also dort, wo normalerweise die Hauseinläufe 2 gelegen sind, befestigt. Das Kabel 3 ist mittels Briden 4 verlegt. Um die Anzahl der Briden 4 zu verringern, ist das Kabel 3 an den Abspannpunkten 5 und 6 eingespannt und mit einer Kraft von z. B. 200 N vorgespannt. Damit das Kabel 3 nicht die Öffnung des Hauseinlaufs 2 beeinträchtigt, sind die Briden 4 in der Nähe des Hauseinlaufs 2 so in das Abwasserrohr eingesetzt, daß das Kabel 3 den Hauseinlauf umfährt, also aus seiner Lage im Scheitelpunkt des Abwasserrohres ausgelenkt wird.

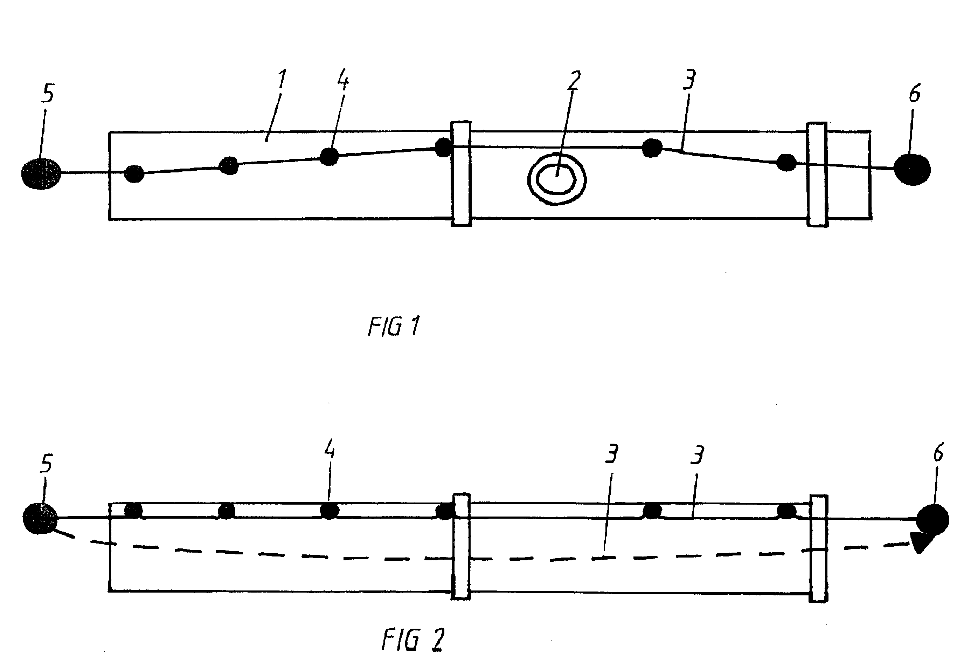

Figur 2 verdeutlicht den Unterschied zwischen einer Verlegung mit verträglichen Spannkräften (gestrichelte Linie) ohne Briden 4 und mit Briden 4 (durchgezogene Linie). Bei der Verlegung werden zunächst die Briden 4 mittels eines Roboters an der inneren Oberfläche des Abwasserrohres 1 verdrehungssicher angebracht und im selben Arbeitsgang das Kabel 1 oder eine Schutzhülle für eine nachträglich einzubringende Kabelseele in die dafür vorgesehenen Aufnahmen in den Briden eingelegt.

Der Abstand der Briden 4 beträgt in unmittelbarer Nähe des Hauseinlaufes 2, d. h. dort, wo das Kabel 3 aus seinem gestreckten Verlauf ausgelenkt ist ca. 2 - 5 m, wogegen der Abstand der Briden 4 zueinander im Bereich der Nichtauslenkung je nach Größe der Spannkraft 10 - 20 m betragen kann.

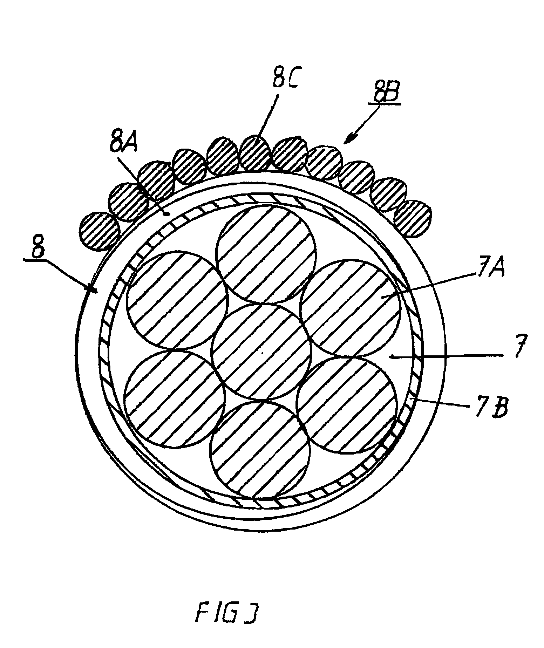

Figur 3 zeigt einen Schnitt durch ein Kabel 3, welches insbesondere für die Verlegung in Abwasserrohren 1 geeignet ist.

Das Kabel 3 besteht aus einer Kabelseele 7 und einer Schutzhülle 8. Die Kabelseele 7 kann beliebig ausgebildet sein, z. B. ein Bändchenstapel, ein Kammerprofil etc.. Bevorzugt wird jedoch ein Bündel aus mehreren z. B. sechs Bündeladern 7a, die um ein nicht näher bezeichnetes zentrales Element herumgeseilt sind. Die Kabelseele 7 ist von einem gemeinsamen Mantel 7b umgeben sind. Anstelle des Mantels kann das Bündel auch durch eine Bebänderung zusammengehalten werden. Jede Bündelader 7a enthält z. B. 24 nicht dargestellte Lichtwellenleiter. Das Kabel weist also insgesamt 144 Lichtwellenleiter auf. Die zwischen den Bündeladern 7a befindlichen Zwischenräume können mit einem längswasserdicht machendem Material ausgefüllt sein. Der Mantel 7b besteht beispielsweise aus Polyamid, Polyethylen oder einem anderen geeigneten Werkstoff.

Die Schutzhülle 8 besteht aus einem querdruckfesten Rohr 8a vorzugsweise aus einem längsnahtgeschweißten und gewellten Rohr aus rostfreiem Stahl.

Um die Abspannkräfte auffangen zu können, ist auf das Rohr 8a eine Armierung 8b aufgebracht, die aus einer oder zwei Lagen metallischer Drähte 8c besteht. Die Drähte 8c bestehen vorzugsweise ebenfalls aus rostfreiem Stahl. Die Drähte 8c sind auf das Rohr 8a aufgeseilt und zwar mit einer Schlaglänge I, die höchstens um den Faktor 10 größer ist als der Außendurchmesser des Rohres 8a. Der Durchmesser der Drähte 8c beträgt in etwa 10 % vom Außendurchmesser des Rohres 8a.

Eine bevorzugte Ausführung des Kabels weist folgende Abmessungen auf.

| | |
|---|---|
| Außendurchmesser der Bündeladern 7a | 2,8 mm |
| Außendurchmesser des Mantels 7b | 11,0 mm |
| Außendurchmesser des Rohres 8a | 14,0 mm |
| Außendurchmesser der Drähte 8c | 0,8 mm |
| Schlaglänge der Drähte 8c | 70,0 mm |

Daraus ergibt sich ein Kabelaußendurchmesser von 15,5 mm.

Um eine Beschädigung des gewellten Rohres 8a beim Abspannen zu vermeiden, ist die Anzahl der Drähte 8c der Armierung 8 so bemessen, daß die Drähte 8c dicht an dicht auf dem Rohr 8a aufliegen.

## Patentansprüche

1. Verfahren zur Verlegung eines Kabels bzw. einer Schutzhülle für eine zu einem späteren Zeitpunkt in die Schutzhülle einzubringende Kabelseele in einem Abwasserrohr, vorzugsweise einem nicht begehbaren Abwasserrohr, bei welchem das Kabel bzw. die Schutzhülle mittels Briden an der Innenwandung des Abwasserrohres in bestimmten Abständen befestigt wird, **dadurch gekennzeichnet, daß** das Kabel bzw. die Schutzhülle im Bereich von Hauseinläufen ausgelenkt wird, so daß das Kabel bzw. die Schutzhülle den Hauseinlauf umfährt, daß der Abstand der Briden voneinander im Bereich der Auslenkung wesentlich kürzer ist als im Bereich des gestreckten Verlaufs des Kabels bzw. der Schutzhülle und daß das Kabel bzw. die Schutzhülle in den Schächten abgespannt und mit einer Kraft von mindestens 250 N vorgespannt wird.

2. Verfahren nach Anspruch 1, **dadurch gekennzeichnet, daß** die Briden im Bereich des gestreckten Verlaufes des Kabels bzw. des Schutzröhrchens in Abständen von mindestens 10 m vorzugsweise mindestens 20 m gesetzt werden.

3. Verfahren nach Anspruch 1 oder 2, **dadurch gekennzeichnet, daß** nach dem Vorspannen des Kabels bzw. Schutzröhrchens der maximale Durchhang weniger als 2 cm beträgt

4. Verfahren nach einem der Ansprüche 1 bis 3, **dadurch gekennzeichnet, daß** mehr als ein Kabel oder Schutzröhrchen in dem Abwasserrohr verlegt wird.

5. Schutzhülle für eine Kabelseele für die Verlegung an der Innenwandung von Entsorgungsrohren, vorzugsweise Abwasserrohren nach einem der Ansprüche 1 bis 4, bestehend aus einem Rohr (8a) mit einer Querdruckfestigkeit von mehr als 100 N/cm² und einer auf dem Rohr (8a) aufliegenden Armierung (8b) aus einer Vielzahl von Einzeldrähten (8c), die mit einer Schlaglänge I auf das Rohr (8a) aufgebracht sind, die sich aus einem Verhältnis von I/D zwischen 5 und 50 vorzugsweise zwischen 10 und 25 ergibt, wobei D der Außendurchmesser des Rohres (8a)ist.

6. Schutzhülle nach Anspruch 5, **dadurch gekennzeichnet, daß** das Rohr (8a) aus einem duktilen Metall wie Kupfer, Aluminium oder Blei besteht.

7. Schutzhülle nach Anspruch 5 oder 6, **dadurch gekennzeichnet, daß** das Rohr (8a) ein gewelltes Metallrohr ist.

8. Schutzhülle nach Anspruch 7, **dadurch gekennzeichnet, daß** das gewellte Rohr (8a) aus Aluminium, einer Aluminiumlegierung oder aus rostfreiem Stahl besteht.

9. Schutzhülle nach einem der Ansprüche 5 bis 8, **dadurch gekennzeichnet, daß** das Verhältnis des Durchmessers d der Einzeldrähte (8c) der Armierung (8b) und dem Außendurchmesser D des Rohres (8a) zwischen 0,05 und 0,5 liegt.

10. Schutzhülle nach einem der Ansprüche 5 bis 9, **dadurch gekennzeichnet, daß** die Armierung (8b) zweilagig ausgebildet ist.

11. Schutzhülle nach einem der Ansprüche 5 bis 10, **dadurch gekennzeichnet, daß** die Einzeldrähte (8c) der Armierung (8b) Drähte aus rostfreiem Stahl sind.

12. Schutzhülle nach einem der Ansprüche 5 bis 11, **dadurch gekennzeichnet, daß** die Einzeldrähte (8c) der Armierung (8b) in engem Kontakt zu den benachbarten Einzeldrähten (8c) auf der Rohroberfläche liegen.
